# EUROPEAN PATENT SPECIFICATION

(11) **EP 4 323 133 B1**
(45) Date of publication and mention of the grant of the patent: **25.11.2026**
(21) Application number: 22723106.5
(22) Date of filing: 14.04.2022
(51) Int. Cl.: B22C 9/08, B22D 7/10, C04B 35/043, C04B 35/101, C04B 35/14, C04B 35/18, C04B 35/42, C04B 35/482, C04B 35/634

(54) **REFRACTORY COMPOSITION**
FEUERFESTE ZUSAMMENSETZUNG
COMPOSITION RÉFRACTAIRE

(30) Priority: 16.04.2021 EP 21168913
(43) Date of publication of application: 21.02.2024
(73) Proprietor: FOSECO INTERNATIONAL LIMITED, London EC4A 2AE (GB)
(72) Inventor: GRANA-SUAREZ, Laura, 7514CE Enschede (NL); KUBIAK, Michael, 45470 Mülheim an der Ruhr (DE); VOSSEBELD, Frank, 7496 Haaksbergen (NL)
(74) Representative: Marks & Clerk LLP
(86) International application number: PCT/EP2022/060119
(87) International publication number: WO 2022/219156

(56) References cited:
- CA-A- 974 764
- CN-A- 106 631 051
- RU-C2- 2 163 579

## Description

### Technical field of the invention

The present invention relates to a composition for use in manufacturing a refractory article and a refractory article for use in a feeding system in metal casting. In particular, the present invention relates to a fluorine-free composition and refractory article for use in a feeding system in metal casting, for example a feeder sleeve, for use in metal casting.

### Background of the invention

In a typical casting process, molten metal is poured into a pre-formed mould cavity that defines the shape of the casting. As the molten metal cools and solidifies, it shrinks, resulting in shrinkage cavities which in turn result in unacceptable imperfections in the final casting. This is a well-known problem in the casting industry and is addressed by the use of feeders or risers which are integrated into the mould. Each feeder provides an additional (usually enclosed) volume or cavity which is in communication with the mould cavity, so that molten metal enters into the feeder cavity from the mould cavity during casting. During solidification of the casting, molten metal within the feeder cavity flows back into the mould cavity to compensate for the shrinkage of the casting.

In order to successfully feed the casting and fill any voids created during shrinkage of the metal, the metal held within the feeder cavity must remain molten for a longer period than the metal in the mould cavity. For this reason, feeders are usually provided with a feeder sleeve made from a highly insulating refractory material, which reduces heat loss from the metal within the feeder cavity and helps it to stay molten for longer. Exothermic feeder sleeves may also be provided, which actively heat the metal within the feeder cavity.

Exothermic sleeves make use of a thermite reaction, in which an oxidisable fuel (usually a metal such as aluminium) is oxidised by an oxidant (typically iron oxide, manganese dioxide, potassium nitrate or a combination thereof) to generate heat at similar temperatures to the molten metal. The thermite reaction is initiated by the heat of the molten metal when it enters the feeder cavity and comes into contact with the fuel and oxidant.

Exothermic feeder sleeves are advantageous in that they permit the use of much smaller feeders for a given feeding application or type of casting. This has benefits in terms of reducing the amount of metal wasted in the feeder, the complexity of castings which can be produced and the number of castings which can be produced per mould. Over the years, significant effort has been expended on optimising exothermic feeder sleeves. The key parameters which are generally considered when evaluating new exothermic sleeves are the ignition time, the maximum temperature achieved (Tₘₐₓ) and the duration of the exothermic reaction (burn time). Increasing the quantity of fuel and/or oxidant does not necessarily increase the duration of the exothermic reaction. In many cases, not all of the fuel is consumed, and so increasing the fuel or oxidant loading may not be economical or practical. In order to improve the efficiency of exothermic sleeves, sensitisers or initiators have been developed, which lower the energy required to initiate the exothermic thermite reaction.

Fluoride-based initiators/sensitisers, such as potassium cryolite (K₃AlF₆) and sodium cryolite (Na₃AlF₆), are used extensively in the foundry industry and are acknowledged to be the most effective and practical sensitisers. However, there are environmental and technical issues caused by fluoride-containing sleeve residues contaminating the mould sand. Foundries are facing increasing problems with the disposal of waste sand containing fluoride residues both in the dry waste and the water leachable component, resulting in higher costs for controlled disposal. Another issue is that a build-up of fluoride residues in recirculated moulding sand leads to a reduction in the refractoriness of the sand and formation of casting surface defects (known as "fish eye").

US6360808 discloses a composition wherein reduced fluoride levels are achieved by using aluminium dross as both the aluminium and fluoride source. US2009/0199991A1 discloses compositions containing metallocenes that may enable fluoride levels to be reduced. US5180759 discloses the use of a fluorinated organic polymer to reduce the overall fluoride content of the exothermic composition. EP1543897B1 and US6972059B1 both disclose fluoride-free compositions that use magnesium as the initiator which, due to its high reactivity, may cause difficulties in the manufacture and processing of exothermic mixtures.

CA 974 764 A relates to the metallurgical hot topping compositions used in the casting of metal ingots to provide an insulating cover over the top of an as-cast ingot in order to increase the feeding life of the ingot hot top.

CN 106 631 051 A relates to wall tiles, and more particularly to refractory tiles and methods for their preparation.

RU 2 163 579 C2 relates to refractory mortars for manufacturing and repairing brickwork.

US 6 972 059 B1 relates to an exothermal feeder mass containing aluminum and magnesium, at least one oxidizing agent, a temperature-resistant SiO₂-containing filler, and an alkali silicate as the binder.

For feeder sleeves manufactured by a slurry route, it is difficult to find a technically feasible alternative to fluoride sensitisers, due to the need to use insoluble materials. Potential alternatives to insoluble fluoride salts, such as certain group II chlorides, may exhibit the necessary insolubility but are known to be less effective sensitisers and cannot meet the necessary performance requirements.

The present invention has been developed with these issues in mind.

### Summary of the invention

The scope of the present invention is defined by independent claim 1, and further embodiments of the invention are specified in dependent claims 2-15.

In some embodiments, the refractory composition comprises from 0.5 to 3 wt% or from 1 to 2 wt% CaSO₄.

The composition of the present invention comprises calcium sulfate (CaSO₄), which acts primarily as a sensitiser and also as an oxidant. The use of CaSO₄ as a sensitiser reduces the ignition time and/or increases the burn efficiency of the exothermic thermite reaction, such that the use of fluoride sensitisers can be reduced or eliminated. Decreasing the amount of fluoride sensitiser reduces fluorine contamination in the moulding sand, thereby mitigating environmental and cost issues associated with disposal of fluorine-contaminated sand and preventing build-up of fluorine in recirculated moulding sand, which may cause casting defects. In some embodiments, the composition comprises an oxidant and/or a sensitiser in addition to calcium sulphate.

It will be understood that, in the context of the present invention, the terms "sensitiser" and "initiator" may be used interchangeably and are used to refer to a substance which lowers the energy required to initiate an exothermic thermite reaction

In some embodiments, the composition comprises no more than 4.0 wt%, no more than 3.5 wt %, no more than 3 wt%, no more than 2.5 wt%, no more than 2 wt%, no more than 1.5 wt%, no more than 1.25 wt%, nor more than 1.0 wt%, no more than 0.5 wt%, or no more than 0.25 wt% of a sensitiser which is not calcium sulphate.

In the present invention, the composition comprises no more than 1.5 wt%, preferably no more than 1.25 wt%, nor more than 1.0 wt%, no more than 0.5 wt%, no more than 0.4 wt%, no more than 0.3 wt%, no more than 0.2 wt% fluorine, no more than 0.1 wt% or no more than 0.05 wt% fluorine. In some embodiments, the composition is substantially fluorine-free, i.e. containing no more than trace amounts of fluorine. Since fluorine compounds can be undesirable for casting quality and environmental reasons it is preferable for the composition to contain as little fluorine as possible while still maintaining desired characteristics of the thermite reaction.

In a preferred series of embodiments, the composition comprises a fluorine compound which is insoluble in water. In some embodiments, the composition comprises no fluorine, or substantially no fluorine, which is water soluble. The inventors have discovered that water-insoluble fluorine compounds can also act as sensitisers. Water-insoluble fluorine compounds are particularly desirable, since they do not contaminate mould sands with fluorine (or fluorine compounds) during reclamation of mould sands e.g. after use in a metal casting process of a refractory article formed from the composition.

In a preferred series of embodiments, the sensitiser may comprise calcium fluoride (CaF₂). Calcium fluoride is a water insoluble mineral, and has been found to act as a sensitiser in a thermite reaction. Without wishing to be bound by theory, it is believed that calcium fluoride acts, at least partly catalytically, to interrupt the oxide layer on aluminium metal. In some embodiments, the sensitiser may comprise magnesium fluoride (MgF₂).

It will be understood that the term "fluorine" as used herein is intended to refer to any compounds which contain fluorine in ionic or covalent form, e.g. in the form of fluoride. In the context of the present application, a "fluorine-free" product is a product that contains no fluorine, or only trace amounts of fluorine, irrespective of form, i.e. it is both fluorine- and fluoride-free.

The oxidant oxidises the oxidisable fuel as part of the thermite reaction. Although CaSO₄ may act as an oxidant as well as a sensitiser in the present invention, it will be understood that the term "oxidant" is used herein to refer to any oxidant present in the composition which is not CaSO₄. Suitable oxidants include iron oxide (Fe₂O_{3,} FeO and/or Fe₃O₄), ferrosilite (FeSiO₃), manganese dioxide (MnO₂), sodium nitrate (NaNO₃), potassium nitrate (KNO₃), sodium chlorate (NaClO₃), potassium chlorate (KClO₃), strontium sulphate (SrSO₄), barium sulphate (BaSO₄), titanium dioxide (TiO₂), copper oxide (CuO), naturally occurring minerals comprising these materials and combinations thereof.

In some embodiments, the oxidant comprises oxidants which are substantially insoluble in water. A material is considered to be substantially insoluble in water if it has a solubility in water of less than 0.5 g/100 ml at 20 °C. Use of insoluble oxidants is advantageous since a refractory article may be prepared from the composition using an aqueous slurry of solid components, as well as being suitable for manufacture via a core-shot process. Oxidants that are substantially insoluble in water include iron oxide, manganese dioxide, copper oxide, strontium sulphate, barium sulphate and titanium dioxide.

In some embodiments, the oxidant comprises one or more oxidants selected from the group consisting of iron oxide (Fe₂O₄ and/or Fe₃O₄), ferrosilite (FeSiO₃), potassium nitrate (KNO₃), manganese dioxide (MnO₂), titanium dioxide (TiO₂) and copper oxide (CuO). In some embodiments, the oxidant comprises a combination of iron oxide (Fe₂O₄ and/or Fe₃O₄), ferrosilite (FeSiO₃) and potassium nitrate (KNO₃).

In the present invention, the composition comprises at least 10 wt%, preferably at least 12 wt%, at least 15 wt%, at least 20 wt% or at least 25 wt% oxidant. In the present invention, the composition comprises no more than 30 wt%, preferably no more than 25 wt%, no more than 20 wt%, no more than 15 wt% or no more than 12 wt% oxidant. In some embodiments, the composition comprises from 10 to 20 wt% oxidant.

In the present invention, the oxidisable fuel comprises a metal. In some embodiments, the metal is selected from one or more of aluminium, magnesium, silicon, tin, zinc and alloys thereof, either individually or as mixtures. In some embodiments, the oxidisable fuel comprises aluminium and silicon metal. Providing a combination of different oxidisable metals having different reactivity may help to tune the characteristics of the thermite reaction (e.g. ignition time, burn time, maximum temperature, etc.) For example, without wishing to be bound by theory, the inventors of the present invention have found that silicon has a higher activation energy than aluminium but also a higher energy output, so providing a combination of silicon metal and aluminium as the oxidisable fuel may help to balance the characteristics of the thermite reaction in the absence of a fluoride sensitiser.

The oxidisable fuel may be in the form of a granular material (e.g. a fine powder, coarse powder, grindings or combinations thereof), a foil, skimmings, dross or combinations thereof. In some embodiments, the oxidisable fuel comprises a combination of metal foil and granular metal. In some embodiments, the oxidisable fuel comprises metal in the form of atomised powder, i.e. very fine powder. Oxidisable fuel in the form of atomised powder may be more reactive than other forms of oxidisable fuel. Providing the oxidisable fuel in a combination of different forms may also help to tune the characteristics of the thermite reaction and balance these characteristics in the absence of a fluoride sensitiser.

In some embodiments, the oxidisable fuel comprises an atomised powder and the atomised powder comprises atomised aluminium, atomised silicon or a combination thereof. In some embodiments, the atomised powder comprises at least 50 wt%, at least 60 wt%, at least 70 wt%, at least 80 wt%, at least 90 wt% or at least 95 wt% atomised aluminium. In some embodiments, the atomised powder comprises at least 2 wt%, at least 5 wt%, at least 10 wt%, at least 20 wt%, at least 30 wt% or at least 40 wt% atomised silicon. In some embodiments, the atomised powder comprises from 60 to 95 wt% atomised aluminium and from 5 to 40 wt% atomised silicon.

The atomised aluminium powder may have a D90 particle size of less than 150 µm, less than 140 µm, less than 130 µm, less than 120 µm, less than 110 µm or less than 100 µm, a D50 particle size of less than 80 µm, less than 70 µm, less than 60 µm, less than 50 µm or less than 40 µm, and/or a D10 particle size of less than 30 µm, less than 25 µm, less than 20 µm, less than 15 µm or less than 10 µm. In some embodiments, the oxidisable fuel comprises atomised aluminium powder having a D90 particle size of less than 130 µm, a D50 particle size of less than 60 µm and a D10 particle size of less than 20 µm.

The atomised silicon powder may have a D90 particle size of less than 65 µm, less than 55 µm, less than 45 µm, less than 35 µm or less than 25 µm. In some embodiments, the oxidisable fuel comprises atomised silicon having a D90 particle size of less than 45 µm.

In some embodiments, the oxidisable fuel comprises atomised aluminium having a D90 particle size of less than 130 µm and atomised silicon having a D90 particle size of less than 45 µm.

In some embodiments, the oxidisable fuel comprises at least 20 wt%, at least 30 wt%, at least 40 wt%, at least 50 wt%, at least 60 wt% or at least 70 wt% atomised powder. In some embodiments, the oxidisable fuel comprises no more than 80 wt%, no more than 70 wt%, no more than 60 wt%, no more than 50 wt% or no more than 40 wt% atomised powder. In some embodiments, the oxidisable fuel comprises from 20 to 80 wt%, from 30 to 70 wt% or from 40 to 60 wt% atomised powder. The exact proportion of atomised powder in the oxidisable fuel may depend on the type and proportions of different metals used. For example, if a low proportion or no silicon is used, a higher proportion of atomised aluminium may be required.

In the present invention, the composition comprises at least 10 wt%, preferably at least 15 wt% or at least 20 wt% oxidisable metal fuel. In the present invention, the composition comprises no more than 25 wt%, preferably no more than 20 wt% or no more than 15 wt% oxidisable metal fuel. In the present invention, the composition comprises from 10 to 25 wt% or preferably from 15 to 25 wt% oxidisable metal fuel.

The composition comprises particulate refractory material, which may act as a filler and provide insulating properties. The particulate refractory material may be in the form of a powder, granules, fibres or any combination thereof. In some embodiments, the particulate refractory material is selected from silica, olivine, alumina, aluminosilicates (including chamotte), pumice, magnesia, chromite, zircon, and combinations thereof.

In the present invention, the composition comprises at least 40 wt%, preferably at least 45 wt%, or at least 50 wt% of particulate refractory material. In the present invention, the composition comprises no more than 60 wt%, preferably no more than 55 wt%, or no more than 50 wt% of particulate refractory material.

Additionally or alternatively, the particulate refractory material may comprise a lightweight material having a density less than 1 g/cm³ or less than 0.5 g/cm³. Such lightweight materials are particularly useful for providing insulation. Suitable lightweight materials include perlite, diatomite, calcined rice husks (rice husk ash), refractory fibres, fly ash floaters (hollow microspheres), cenospheres, other natural or synthetic hollowspheres such as alumina, silica or aluminosilicate, and combinations thereof.

Suitable binders for use in the present invention include resins (e.g. phenolformaldehyde resin or urea formaldehyde resin), gums (e.g. gum arabic or xanthan gum), sulphite lye, starches, acrylic dispersions, colloidal silica, colloidal alumina and combinations thereof. In some embodiments, the binder comprises a combination of resin and starch. In some embodiments, the binder may comprise more than one starch. In some embodiments, the one or more starches may comprise wheat starch, potato starch, maize starch, waxy maize starch, rice starch, soya starch, tapioca starch, modified starches, cationic starches, hot-swelling starches, and combinations thereof. In some embodiments, the one or more starches may be partially or fully pre-gelatinised. In one series of embodiments, the one or more starches comprises a combination of a non-pre-gelatinised starch and a pre-gelatinised starch, and preferably wherein both are wheat starch.

In a preferred series of embodiments, the binder is non-toxic and/or bio-degradable.

Starches are particularly preferred since they break down easily and do not contaminate mould sands after use e.g. during reclamation of the mould sand the starches can simply be washed out without requiring subsequent specialist water treatment.

In some embodiments, the composition comprises from 0.5 to 5 wt%, or from 1 to 4 wt%, or from 1.5 to 3.5 wt% or from 2 to 3 wt% of binder.

In some embodiments, the composition further comprises a carrier fluid, such as water. Preferably, the composition comprises a carrier fluid in which the other components of the composition are not soluble, so that the composition may form a slurry of suspended solid components for making the refractory article.

According to a second aspect of the invention, there is provided a refractory article for use in a feeding system in metal casting. The refractory article is formed from a composition as described herein.

The refractory article may be produced by a variety of methods including slurry (vacuum forming) or core-shooting (blowing or ramming). The choice of binder may depend on the method by which the refractory article is manufactured.

In some embodiments, the refractory article is an exothermic refractory article.

Refractory articles may include a number of products used in a foundry to assist in feeding a metal casting, such as feeder sleeves (also known as just "feeders" or "sleeves") and other shaped articles that cover part of the casting or casting mould assembly (e.g. feeder boards, profiled cores, exothermic padding, and sleeve and core combinations).

In some embodiments, the refractory article is a feeder sleeve. The shape of the feeder sleeve is not particularly limited. The feeder sleeve may have a circular or an oval cross-section, it may have parallel or sloping sides and it may be open or closed. In an embodiment where the feeder sleeve is closed, it may have a domed or flat cover. The feeder sleeve may be cylindrical (i.e. having a circular cross-section and parallel sides) or frustoconical (i.e. having a circular cross-section and sloping sides).

In some embodiments, the refractory article is a feeder board, which may be in the form of jointed mats. The jointed mats may be wrapped around a feeder pattern or made up into a conventional feeder sleeve. Alternatively, the feeder board may be employed as a feeder lid to be placed upon an open feeder sleeve, with the shape of the board being determined by the shape of the feeder sleeve. Typically the feeder lid will have a circular or oval cross-section.

In some embodiments, the refractory article is a Williams core (also known as a Williams wedge). A Williams core is an article with a sharp pointed edge, typically being in the shape of a cone or wedge, which is located at the top of a closed sleeve to improve and stabilise the feeding effect. Williams cores may be formed integrally with a feeder sleeve or they may be produced separately and then fixed to the inside of a sleeve.

In some embodiments, the refractory article may comprise a combination of a sleeve component and a breaker core component that is in contact with the casting surface, with a profiled shape specifically designed to match the shape of the desired casting.

In some embodiments, the refractory article may comprise a profiled shape known as padding, whereby the exothermic nature of the padding can be used to extend the feeding distance of a sleeve, or to delay and or control the solidification time of the casting section beneath the padding. In one embodiment, the padding is used in combination with a sleeve component to form a single unit.

It will be understood that any of the optional features and embodiments described in relation to the first aspect may apply equally to the composition of the second aspect.

### Experimental procedures

Standard cylindrical test bodies were prepared using the Georg Fischer (+GF+) method. Green (uncured) feeder sleeves were first produced using a slurry method. The green feeder sleeves were then chopped up and mixed using a flat blade paddle mixer until the components were fully mixed and the composition was uniform. A sample of the mixture was loosely packed into a cylindrical precision test body (50 mm internal diameter) and placed on the +GF+ sand rammer (type SPRA) and the mixture compressed via three ramming motions. After ensuring that the height was within the tolerance marks, the test bodies were removed using an ejector (stripping post). The test bodies were then hardened by placing them in a drying oven at 160 °C for 90 minutes. The resulting cylindrical test bodies had dimensions of 50 mm x 50 mm.

The test bodies had the following general composition (based on solids content):
0.5 to 5 wt% calcium sulfate
0 to 2 wt% fluorine-based sensitiser
7 to 10 wt% iron oxide (Fe₃O₄) oxidant
10 to 20 wt% oxidant comprising potassium nitrate and ferrosilite 10 to 20 wt% aluminium
1 to 5 wt% silicon
0.5 to 5 wt% binders
40 to 60 wt% high density refractory fillers
0 to 5 wt% low density refractory fillers

The aluminium comprised a mixture of aluminium foil, powder and grindings. The silicon comprised an atomised silicon powder. The high density refractory fillers comprised a mixture of sand, chamotte, pumice and aluminosilicate materials, while the low density refractory fillers comprised cenospheres.

The proportion of high and low density refractory fillers was adjusted as appropriate to make up the balance of all components to a total of 100 wt%.

### Ignition time and burn time

Using in-house test equipment (Amitec), the standard test body was placed on an electrically heated silicon carbide (SiC) plate, pre-heated and maintained at 1400 °C. The ignition time was measured from the body being placed on the heating device until ignition (reported in seconds). As soon as ignition occurred, the test body was transferred to a sand bed where it was allowed to burn out. The burn time was measured as the period from ignition to end of burning (reported in seconds).

The desired ignition and burn time will vary depending on the application. A short ignition time is particularly useful for small feeder sleeves where it is essential to feed the casting very quickly. For larger feeder sleeves a longer burn time is useful since the casting can be fed for longer, and the ignition time is not so important.

### Maximum temperature and time above 1150 °C

An Al₂O₃ protective tube was fitted to a green standard test body by pressing it into the exact centre of the body to a depth of 25 mm. The test body was then dried and a thermocouple was connected to a plotter inserted into the protective tube. The test body was ignited and the maximum temperature reached (Tmax) was recorded by the plotter, as well as the time above 1150 °C (t >1150 °C).

In casting applications, the feeder sleeve only serves a useful purpose when the metal in the feeder is maintained as a liquid. The liquidus temperature of ferrous metals is in the region of 1150 °C, and so t>1150 °C may provide a more accurate guide to a feeder sleeve's performance than the burn time.

### Example 1

A series of test bodies were produced and tested as described above, using compositions comprising varying proportions of fluoride-based sensitiser. The test results are detailed in Table 1 below. Examples E1-E3 are inventive examples.

**Table 1**

| | | **E1** | **E2** | **E3** |
|---|---|---|---|---|
| Sensitiser (wt%) | Calcium fluoride | 0.5 | 0.7 | 2.0 |
| | Calcium sulfate | 1.5 | 1.5 | 1.5 |
| Oxidant (wt%) | Iron oxide (Fe₃O₄) | 9.0 | 9.0 | 9.0 |
| | Potassium nitrate | 11.0 | 11.0 | 11.0 |
| | Ferrosilite | 5.0 | 5.0 | 5.0 |
| Oxidisable fuel (wt%) | Aluminium (foil) | 8.5 | 8.5 | 8.5 |
| | Aluminium (atomised) | 8.2 | 8.2 | 8.2 |
| | Silicon (atomised) | 2.0 | 2.0 | 2.0 |
| Refractory filler (wt%) | High density | 50.9 | 50.7 | 49.4 |
| | Low density | 0.5 | 0.5 | 0.5 |
| Binders (wt%) | Starch | 1.4 | 1.4 | 1.4 |
| | Resin | 1.5 | 1.5 | 1.5 |
| Ignition time (s) | | 30 | 25 | 20 |
| Burn time (s) | | 170 | 158 | 110 |
| Tmax, oxidation (°C) | | 1535 | 1539 | 1638 |
| t>1150 °C, oxidation (s) | | 252 | 251 | 234 |
| Tmax, reduction (°C) | | 1439 | 1423 | 1519 |
| t>1150 °C, reduction (s) | | 219 | 235 | 255 |

The results obtained demonstrate that compositions comprising calcium sulfate still achieve good exothermic performance even with lower levels of fluoride-based sensitiser. The test bodies made using low-fluoride compositions (E1 and E2) exhibited slightly longer ignition times and lower maximum temperatures, but also achieved significantly longer burn times and time above 1150 °C than the higher fluoride composition (E3).

### Example 2

Another series of test bodies was evaluated using different low-fluoride compositions, comprising varying proportions of atomised aluminium powder and coarse granular aluminium. The results are detailed in Table 2 below. Examples E4-E8 are inventive examples.

**Table 2**

| | | **E4** | **E5** | **E6** | **E7** | **E8** |
|---|---|---|---|---|---|---|
| Sensitiser (wt%) | Calcium fluoride | 0.7 | 0.7 | 0.7 | 0.7 | 0.7 |
| | Calcium sulfate | 1.6 | 1.6 | 1.6 | 1.6 | 1.6 |
| Oxidant (wt%) | Iron oxide (Fe₃O₄) | 8.9 | 8.9 | 8.9 | 8.9 | 8.9 |
| | Potassium nitrate | 10.8 | 10.8 | 10.8 | 10.8 | 10.8 |
| | Ferrosilite | 3.3 | 3.3 | 3.3 | 3.3 | 3.3 |
| Oxidisable fuel (wt%) | Aluminium (foil) | 8.5 | 8.5 | 8.5 | 8.5 | 8.5 |
| | Aluminium (grindings) | 0 | 2.05 | 4.10 | 6.15 | 8.20 |
| | Aluminium (atomised) | 8.20 | 6.15 | 4.10 | 2.05 | 0 |
| | Silicon (atomised) | 2.0 | 2.0 | 2.0 | 2.0 | 2.0 |
| Refractory filler (wt%) | High density | 52.7 | 52.7 | 52.7 | 52.7 | 52.7 |
| | Low density | 0.5 | 0.5 | 0.5 | 0.5 | 0.5 |
| Binders (wt%) | Starch | 1.3 | 1.3 | 1.3 | 1.3 | 1.3 |
| | Resin | 1.5 | 1.5 | 1.5 | 1.5 | 1.5 |
| Ignition time (s) | | 35 | 30 | 30 | 40 | 40 |
| Burn time (s) | | 225 | 215 | 212 | 180 | 180 |
| Tmax, oxidation (°C) | | 1522 | 1516 | 1504 | 1520 | 1558 |
| t>1150 °C, oxidation (s) | | 263 | 269 | 253 | 261 | 245 |
| Tmax, reduction (°C) | | 1341 | 1377 | 1195 | 1431 | 1306 |
| t>1150 °C, reduction (s) | | 168 | 248 | 72 | 242 | 171 |

The results obtained demonstrate how the reaction characteristics of a low-fluoride refractory article can be tuned by altering the proportion of finer (more reactive) aluminium and coarser (less reactive) aluminium. In general, the low-fluoride compositions containing higher proportions of atomised aluminium powder were found to exhibit shorter ignition times and longer burn times than the compositions containing lower proportions of atomised aluminium powder.

### Example 3

Feeder sleeves in accordance with the present invention (E9, E10 and E11) were compared with a commercially available exothermic feeder sleeve (C1), made using the following compositions:

**Table 3**

| | | **E1** | **E2** | **E3** | **C1** |
|---|---|---|---|---|---|
| Sensitiser (wt%) | Calcium fluoride | 0.4 | 0.5 | 0.6 | 1.9 |
| | Calcium sulfate | 1.4 | 1.4 | 1.6 | 0 |
| Oxidant (wt%) | Iron oxide (Fe₃O₄) | 9.4 | 8.5 | 8.5 | 5.2 |
| | Potassium nitrate | 9.4 | 9.4 | 10.4 | 9.2 |
| | Ferrosilite | 3.1 | 4.7 | 3.2 | 3.2 |
| Oxidisable Fuel (wt%) | Aluminium | 15.5 | 17.0 | 16.0 | 27.0 |
| | Silicon | 3.3 | 3.3 | 1.9 | 0 |
| Refractory Filler (wt%) | High density | 47.6 | 49.7 | 48.9 | 41.6 |
| | Low density | 1.9 | 0.5 | 0.5 | 2.5 |
| Binder (wt%) | Starch | 1.9 | 0 | 1.3 | 1.8 |
| | Resin | 0 | 0 | 1.5 | 2.0 |
| | Xanthan gum | 0.9 | 1.0 | 0 | 0 |
| Carrier Fluid (wt%) | Water | 5.2 | 4.0 | 5.5 | 5.6 |

The example feeder sleeves made using compositions E1-E3 were found to exhibit similar feeding performance to the commercial feeder sleeve C1, but with significantly less fluorine-based sensitiser in the composition. The inventors have further found that the water insolubility of the calcium fluoride used means that there is no contamination issue during reclamation of mould sand after a metal casting process has been carried out. In combination with the use of biodegradable binders, such as starch and xanthan gum, the environmental characteristics of the example feeder sleeves are greatly improved compared with the commercial feeder sleeve.

## Claims

1. A composition for making a refractory article for use in a feeding system in metal casting, the composition comprising:
40-60 wt% of a particulate refractory material;
10-25 wt% of an oxidisable metal fuel;
10-30 wt% of an oxidant;
a sensitiser; and
a binder,
wherein the composition comprises from 0.5 to 5 wt% CaSO₄; and
wherein the composition comprises no more than 1.5 wt% fluorine.

2. The composition of claim 1, wherein the composition comprises no more than 1.0 wt% fluorine, or wherein the composition is fluorine-free.

3. The composition according to any one of the preceding claims, wherein the sensitiser comprises a fluorine compound which is insoluble in water.

4. The composition according to claim 3, wherein the fluorine compound is calcium fluoride (CaF₂).

5. The composition of any one of the preceding claims, wherein the oxidant comprises one or more oxidants selected from the group consisting of: iron oxide (Fe₂O₄ and/or Fe₃O₄), ferrosilite (FeSiO₃), potassium nitrate (KNO₃), manganese dioxide (MnO₂), titanium dioxide (TiO₂) and copper oxide (CuO).

6. The composition of any one of the preceding claims, wherein the oxidisable fuel comprises aluminium, and optionally wherein the oxidisable fuel comprises aluminium foil and/or granular aluminium.

7. The composition of any one of the preceding claims, wherein the oxidisable fuel comprises silicon metal.

8. The composition of any one of the preceding claims, wherein the oxidisable fuel comprises an atomised powder, optionally wherein the atomised powder comprises atomised aluminium and/or atomised silicon metal.

9. The composition of claim 8, wherein the atomised powder comprises at least 60 wt% atomised aluminium.

10. The composition of claim 8 or claim 9, wherein the atomised powder comprises at least 10 wt% atomised silicon metal.

11. The composition of any one of claims 8 to 10, wherein the oxidisable fuel comprises at least 30 wt% atomised powder.

12. The composition of any one of the preceding claims, further comprising a carrier fluid, optionally wherein the carrier fluid is water.

13. The composition of any one of the preceding claims, wherein said refractory article is an exothermic refractory article.

14. A refractory article for use in a feeding system in metal casting, wherein the article is formed from a composition according to any one of the preceding claims.

15. The refractory article of claim 14, wherein the refractory article is a feeder sleeve.

## Patentansprüche

1. Zusammensetzung zur Herstellung eines feuerfesten Artikels zur Verwendung in einem Zuführsystem beim Metallguss, wobei die Zusammensetzung umfasst:
40-60 Gew.-% eines partikelförmigen feuerfesten Materials;
10-25 Gew.-% eines oxidierbaren Metallbrennstoffs;
10-30 Gew.-% eines Oxidationsmittels;
einen Sensibilisator; und
ein Bindemittel,
wobei die Zusammensetzung 0,5 bis 5 Gew.-% CaSO₄ umfasst; und
wobei die Zusammensetzung nicht mehr als 1,5 Gew.-% Fluor umfasst.

2. Zusammensetzung nach Anspruch 1, wobei die Zusammensetzung nicht mehr als 1,0 Gew.-% Fluor umfasst oder wobei die Zusammensetzung fluorfrei ist.

3. Zusammensetzung nach einem der vorstehenden Ansprüche, wobei der Sensibilisator eine in Wasser unlösliche Fluorverbindung umfasst.

4. Zusammensetzung nach Anspruch 3, wobei die Fluorverbindung Calciumfluorid (CaF₂) ist.

5. Zusammensetzung nach einem der vorstehenden Ansprüche, wobei das Oxidationsmittel ein oder mehrere Oxidationsmittel umfasst, die aus der Gruppe ausgewählt sind, bestehend aus: Eisenoxid (Fe₂O₄ und/oder Fe₃O₄), Ferrosilit (FeSiO₃), Kaliumnitrat (KNO₃), Mangandioxid (MnO₂), Titandioxid (TiO₂) und Kupferoxid (CuO).

6. Zusammensetzung nach einem der vorstehenden Ansprüche, wobei der oxidierbare Brennstoff Aluminium umfasst und wobei der oxidierbare Brennstoff optional Aluminiumfolie und/oder granuliertes Aluminium umfasst.

7. Zusammensetzung nach einem der vorstehenden Ansprüche, wobei der oxidierbare Brennstoff Siliziummetall umfasst.

8. Zusammensetzung nach einem der vorstehenden Ansprüche, wobei der oxidierbare Brennstoff ein zerstäubtes Pulver umfasst, wobei das zerstäubte Pulver optional zerstäubtes Aluminium und/oder zerstäubtes Siliziummetall umfasst.

9. Zusammensetzung nach Anspruch 8, wobei das zerstäubte Pulver mindestens 60 Gew.-% zerstäubtes Aluminium umfasst.

10. Zusammensetzung nach Anspruch 8 oder 9, wobei das zerstäubte Pulver mindestens 10 Gew.- % zerstäubtes Siliziummetall umfasst.

11. Zusammensetzung nach einem der Ansprüche 8 bis 10, wobei der oxidierbare Brennstoff mindestens 30 Gew.-% zerstäubtes Pulver umfasst.

12. Zusammensetzung nach einem der vorstehenden Ansprüche, weiter umfassend ein Trägerfluid, wobei das Trägerfluid optional Wasser ist.

13. Zusammensetzung nach einem der vorstehenden Ansprüche, wobei der feuerfeste Artikel ein exothermer feuerfester Artikel ist.

14. Feuerfester Artikel zur Verwendung in einem Zuführsystem beim Metallguss, wobei der Artikel aus einer Zusammensetzung nach einem der vorstehenden Ansprüche gebildet ist.

15. Feuerfester Artikel nach Anspruch 14, wobei der feuerfeste Artikel eine Zuführhülse ist.

## Revendications

1. Composition pour la fabrication d'un article réfractaire destiné à être utilisé dans un système d'alimentation de coulée de métal, la composition comprenant :
de 40 à 60 % en poids d'un matériau réfractaire particulaire ;
de 10 à 25 % en poids d'un combustible métallique oxydable ;
de 10 à 30 % en poids d'un oxydant ;
un sensibilisateur ; et
un liant,
dans laquelle la composition comprend de 0,5 à 5 % en poids de CaSO₄ ; et
dans laquelle la composition ne comprend pas plus de 1,5 % en poids de fluor.

2. Composition selon la revendication 1, dans laquelle la composition ne comprend pas plus de 1,0 % en poids de fluor, ou dans laquelle la composition est exempte de fluor.

3. Composition selon l'une quelconque des revendications précédentes, dans laquelle le sensibilisateur comprend un composé fluor insoluble dans l'eau.

4. Composition selon la revendication 3, dans laquelle le composé fluor est le fluorure de calcium (CaF₂).

5. Composition selon l'une quelconque des revendications précédentes, dans laquelle l'oxydant comprend un ou plusieurs oxydants choisis parmi le groupe constitué de : oxyde de fer (Fe₂O₄ et/ou Fe₃O₄), ferrosilite (FeSiO₃), nitrate de potassium (KNO₃), dioxyde de manganèse (MnO₂), dioxyde de titane (TiO₂) et oxyde de cuivre (CuO).

6. Composition selon l'une quelconque des revendications précédentes, dans laquelle le combustible oxydable comprend de l'aluminium, et facultativement dans laquelle le combustible oxydable comprend une feuille d'aluminium et/ou de l'aluminium granulaire.

7. Composition selon l'une quelconque des revendications précédentes, dans laquelle le combustible oxydable comprend du silicium métallique.

8. Composition selon l'une quelconque des revendications précédentes, dans laquelle le combustible oxydable comprend une poudre atomisée, facultativement dans laquelle la poudre atomisée comprend de l'aluminium atomisé et/ou du silicium métallique atomisé.

9. Composition selon la revendication 8, dans laquelle la poudre atomisée comprend au moins 60 % en poids d'aluminium atomisé.

10. Composition selon la revendication 8 ou la revendication 9, dans laquelle la poudre atomisée comprend au moins 10 % en poids de silicium métallique atomisé.

11. Composition selon l'une quelconque des revendications 8 à 10, dans laquelle le combustible oxydable comprend au moins 30 % en poids de poudre atomisée.

12. Composition selon l'une quelconque des revendications précédentes, comprenant en outre un fluide porteur, facultativement dans laquelle le fluide porteur est l'eau.

13. Composition selon l'une quelconque des revendications précédentes, dans laquelle ledit article réfractaire est un article réfractaire exothermique.

14. Article réfractaire destiné à être utilisé dans un système d'alimentation de coulée de métal, dans lequel l'article est formé d'une composition selon l'une quelconque des revendications précédentes.

15. Article réfractaire selon la revendication 14, dans lequel l'article réfractaire est un tube de distributeur.
